# EUROPEAN PATENT SPECIFICATION

(11) **EP 0 690 972 B1**
(45) Date of publication and mention of the grant of the patent: **18.03.1998**
(21) Application number: 93908517.1
(22) Date of filing: 22.03.1993
(51) Int. Cl.: G01C 19/66

(54) **LASER GYRO DITHER STRIPPER**
SCHALTUNG ZUR UNTERDRÜCKUNG VON SCHWINGUNGEN IN EINEM LASERKREISEL
APPAREIL DE SUPPRESSION DU SIGNAL D'ACTIVATION D'UN GYROLASER

(43) Date of publication of application: 10.01.1996
(73) Proprietor: HONEYWELL INC., Minneapolis Minnesota 55408 (US)
(72) Inventor: FRITZE, Keith, R., Orono, MN 55356 (US); KILLPATRICK, Joseph, E., Minneapolis, MN 55418 (US); BERNDT, Dale, F., Plymouth, MN 55441 (US)
(74) Representative: Herzbach, Dieter, Dipl.-Ing.
(86) International application number: US9302697
(87) International publication number: WO9421986

(56) References cited:
- WO-A-88/04767
- WO-A-91/06828
- US-A- 5 225 889

## Description

This invention relates generally to laser gyros and, more particularly, to a method and apparatus for removing the dither signal component from the inertial output of a laser gyro.

### BACKGROUND OF THE INVENTION

Ring laser angular rate sensors, also called laser gyros, are well known in the art. One example of a ring laser angular rate sensor is US Patent No. 4,751,718 issued to Hanse, et al., which is incorporated herein by reference thereto. Present day ring laser angular rate sensors include a thermally and mechanically stable laser block having a plurality of formed cavities for enclosing a gap. Mirrors are placed at the extremities of the cavities for reflecting laser beams and providing an optical closed-loop path.

Associated with such sensors is an undesirable phenomenon called lock-in which has been recognized for some time in the prior art. In the prior art, the lock-in phenomenon has been addressed by rotationally oscillating or dithering such sensors. The rotational oscillation is typically provided by a dither motor. Dither motors of the prior art usually have a suspension system which includes, for example, an outer rim, a central hub member and a plurality of three dither motor reeds which project radially from the hub member and are connected between the hub member and the rim. Conventionally, a set of piezoelectric elements which serve as an actuator is connected to the suspension system. When actuated through the application of an electrical signal to the piezoelectric elements, the suspension system operates as a dither motor which causes the block of the sensor to oscillate angularly at the natural mechanical resonant frequency of the suspension system. This dither motion is superimposed upon the inertial rotation of the sensor in inertial space. Such dither motors may be used in connection with a single laser gyro, or to dither multiple laser gyros. The prior art includes various approaches to recover inertial rotation data free from dither effects.

One such approach from which the preamble of claim 1 departs is known from W091/06828 and uses the angle of dither rotation of a gyro calculated from current and immediately preceding digital values, weighted by a gain factor and then subtracted from the incremental change in the gyro output signal as read from a counter.

Another approach is known from WO88/04767 where the output signal of a dithered ring laser angular rate sensor and a signal representative of the resultant dithering of the sensor are each independently signal analyzed to obtain the frequency components contained in such signals. Data pairs of frequency components of the same frequency are signal processed in a manner to derive a correction signal representative of the dither frequency component in the readout signal. This correction signal is subtracted from the readout signal to provide a corrected readout signal substantially devoid of any dither signal component.

### SUMMARY OF THE INVENTION

A dither stripper apparatus for a laser gyro is provided by the present invention. The dither stripper apparatus of the invention comprises a microcontroller based stripping apparatus that senses a dither analog signal from a dither pickoff. The dither analog signal is converted to a digital form and is compensated by a closed loop system using a microcontroller to adjust the signal gain. The dither signal is compared against a value and an error signal is produced. The dither signal is then subtracted from the laser read out to provide a dither stripped read out signal of inertial navigation information. The stripped signal is further processed to complete the closed loop gain control function of the invention as defined in claim 1 and operating according to the method of claim 9.

It is an object of the invention to provide a dither stripping method and apparatus for a modular laser gyro.

It is yet another object of the invention to provide an improved dither stripping method and apparatus that utilizes a microprocessor embedded within a microcontroller having an integrated A/D converter.

It is another object of the invention to provide an improved dither stripping method and apparatus for a laser gyro that samples a dither pickoff and provides a scheduled dither A/D conversion at a system sample time.

It is yet another object of the invention to provide a dither stripping method and apparatus that can strip the dither from more than one laser gyro.

It is an object of the invention to provide an improved dither stripping method and apparatus for a laser gyro that arbitrates a single A/D converter between a dither stripper and dither drive operation.

Other objects, features and advantages of the present invention will become apparent to those skilled in the art through the Description of the Preferred Embodiment, Claims, and drawings herein wherein like numerals refer to like elements.

### BRIEF DESCRIPTION OF THE DRAWINGS

Figure 1A shows a block diagram of one embodiment of a laser gyro employing the novel features of the present invention.

Figure 1B shows a plot of the dither signal with examples of the system sample strobe.

Figure 2 schematically shows a circuit diagram of one example of a dither pickoff circuit made in accordance with the present invention.

Figure 3 schematically shows the method of dither stripping of the invention.

Figure 4 shows a detailed diagram of an embodiment of the dither stripping circuit as provided by one aspect of the invention.

Figure 5 shows a register block diagram of the automatic gain control register used in the dither stripping apparatus of the invention.

Figure 6 shows the method of the invention used to predict the sample strobe.

Figure 7 shows the method of monitoring the modular gyro with the monitor control loop.

Figure 8 shows a schematic representation of the method and apparatus of the invention used to arbitrate a single analog to digital converter between a multiple number of dither applications. Figure 9 shows a schematic diagram of the method of handling an A/D conversion when called by either the dither drive, the dither stripper or background processes.

Figure 10 shows a schematic diagram of the interrupt service routine for the software timer interrupt.

Figure 11 shows the method of the invention utilizing multiple analog to digital converters.

Figure 12 shows the method of the invention to queue a background analog to digital conversion.

### DESCRIPTION OF THE PREFERRED EMBODIMENT

The laser gyro dither stripper performs the phase-locked dither stripping of the dither signal from the inertial navigation signal. The dither stripper uses a microcontroller to control a gain factor in the dither stripper feed back loop.

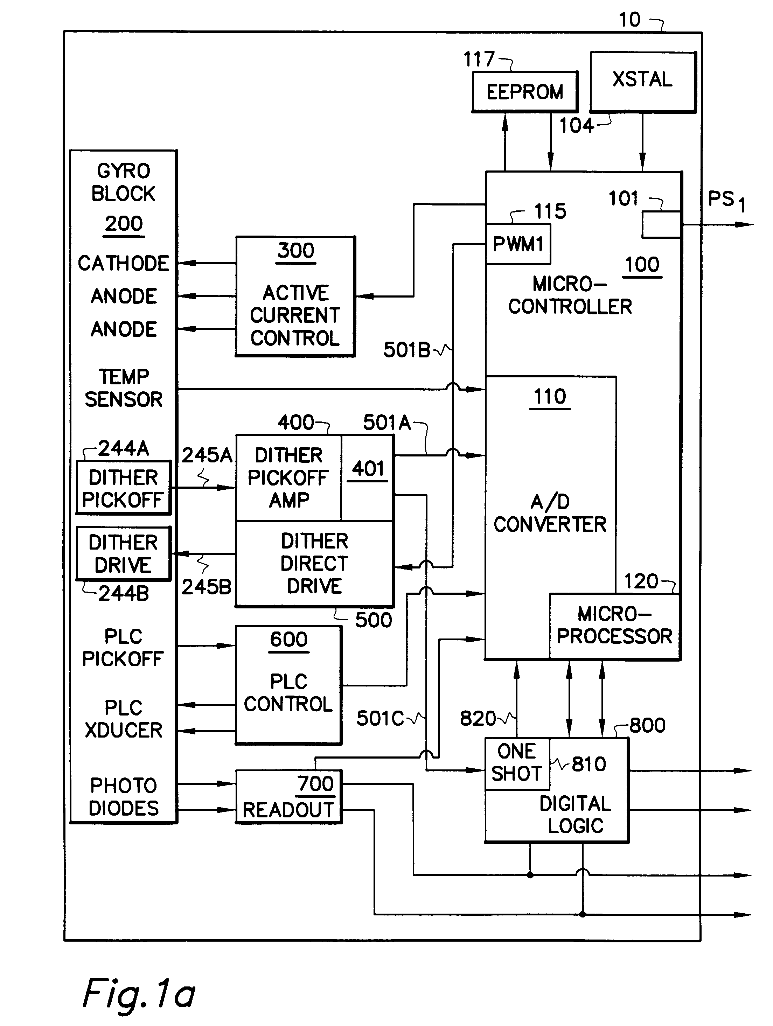

Referring now to Figure 1A which shows a block diagram of one embodiment of a modular laser gyro employing the novel features of the present invention. The instant invention will be explained by way of example embodiments. Those skilled in the art having the benefit of this disclosure will appreciate that the examples herein are by way of illustration of the principals of the invention and not by way of limitation. Laser gyro 10 includes a controller 100, a laser gyro block 200, an active current control 300, dither pickoff amplifier 400, direct digital dither drive 500, a path length control (PLC) device 600, a readout 700, and digital logic 800.

The dither stripper of the invention is implemented in one example embodiment with a micro-controller serving as controller 100. It is a closed loop system comprising a dither pickoff 244A, dither pickoff amplifier circuit 400, A/D converter 110, controller 100, PWM output 115, direct dither drive 500 and dither motor 244B. The A/D converter 110 may be integral to the controller and may advantageously be a 10 - bit A/D converter. The controller may also advantageously include a microprocessor 120.

Briefly, in operation the RLG Block position represented by a pickoff voltage 245A is first amplified by dither pickoff amplifier 400. The amplified dither pickoff signal 501A is sent to the A/D converter 110 and also to a comparator 401 which in turn generates a square wave 501C which is sent to a one shot 810 to limit the maximum frequency of the interrupt. The one shot 810 is periodically reset at approximately the rate of 1000Hz. The output of the one shot interrupts the controller at positive edge zero crossings.

In one preferred embodiment of the invention a micro-controller100 is comprised of the Intel 80C196KC Micro-controller. The micro-controller contains three pulse width modulators which in this embodiment of the invention are used for various control functions. The first pulse width modulator PWM 1 is used for controlling the dither drive circuit. A number of software modules are involved in the initialization and control of the micro-controller 100. The software programs are run by the microprocessor 120 contained within the micro-controller 100.

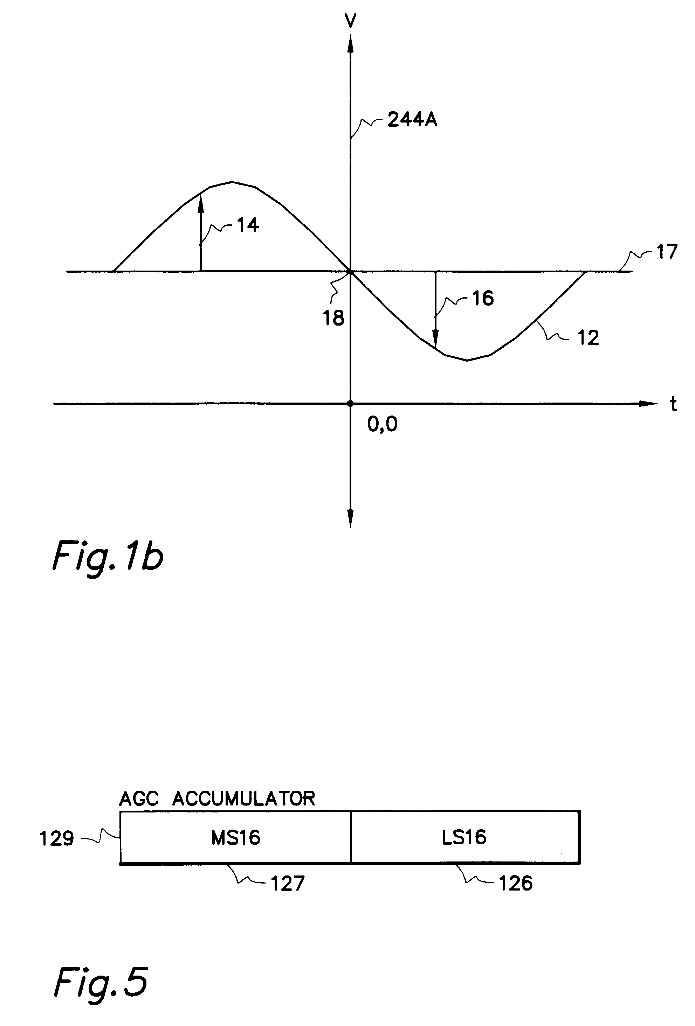

Now referring to Figure 1B which shows a dither pickoff signal verses time plot of the modular laser gyro of Figure 1A. The dither pickoff signal 12 is shown going through a zero crossing point 18. The zero crossing point 18 represents the position of the laser block half way between the minimum and maximum dither. Figure 1B also shows the sample times 14 and 16. The sample times 14 and 16 are determined by an external system. The sample clock used by the external system synchronizes other inertial navigation measurements such as other gyros and other accelerometers to insure that all readings from all inertial navigation systems will occur at the same time. Because of this requirement the sample times 14 and 16 must be predicted to provide adequate time to process the dither signal 12.

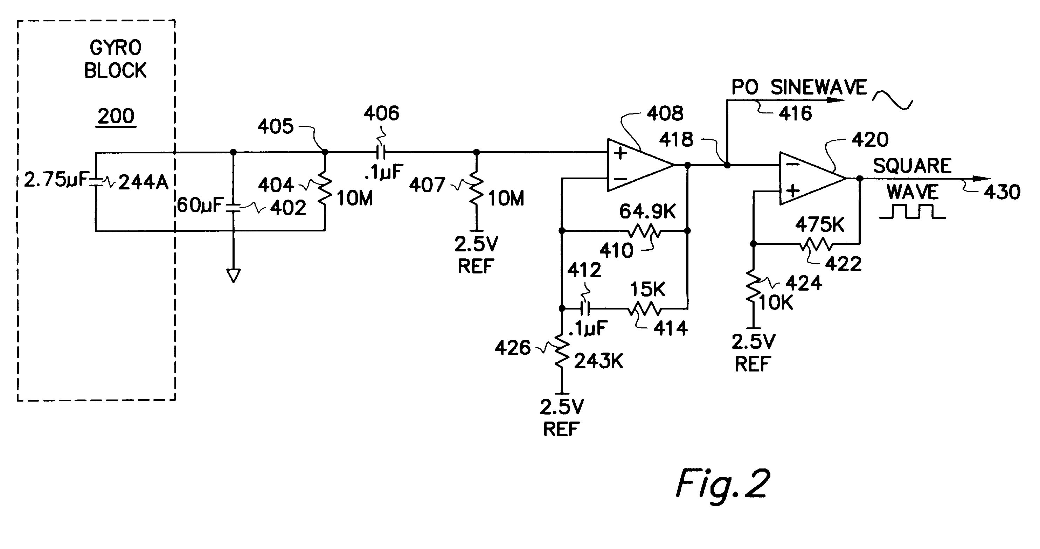

Referring now to Figure 2 which shows a circuit diagram of one example of a dither pickoff circuit made in accordance with the present invention. In one example, the dither pickoff apparatus comprises at least first, second and third capacitors 402, 406, 412, first through seventh resistors 404, 407, 410, 414, 422, 424, 426 and first and second amplifying means 408, 420. Also shown is dither pickoff 244A which is here symbolized by its inherent capacitance. The first capacitor 402 is connected in parallel with the first resistor 404 at node 405. The dither pickoff is also connected at node 405. The second capacitor 406 is coupled at a first terminal to node 405 and at its other terminal to a non-inverting input of the first amplifier 408. The first amplifier 408, resistors 410, 414 and 426 and capacitor 412 are connected in an arrangement suitable to provide a first gain factor and phase compensation to the dither pickoff circuit. The output 418 of the first amplifier provides a substantially sinusoidal signal 416 which is representative of the dither pickoff to an analog-to-digital input of the microcontroller 100. The second amplifier 420, and resistors 422 and 424 are connected and arranged in a well known manner to provide a substantially square wave signal 430 to the zero crossing input to a one shot 810 in the digital logic 800 and finally to the controller 100. The signal 430 is also representative of the dither pickoff and provides the basic zero crossing detection signal from which the dither period is calculated. The one shot 810 limits the maximum interrupt frequency to 1000 Hz and thereby eliminates false interrupts during start up.

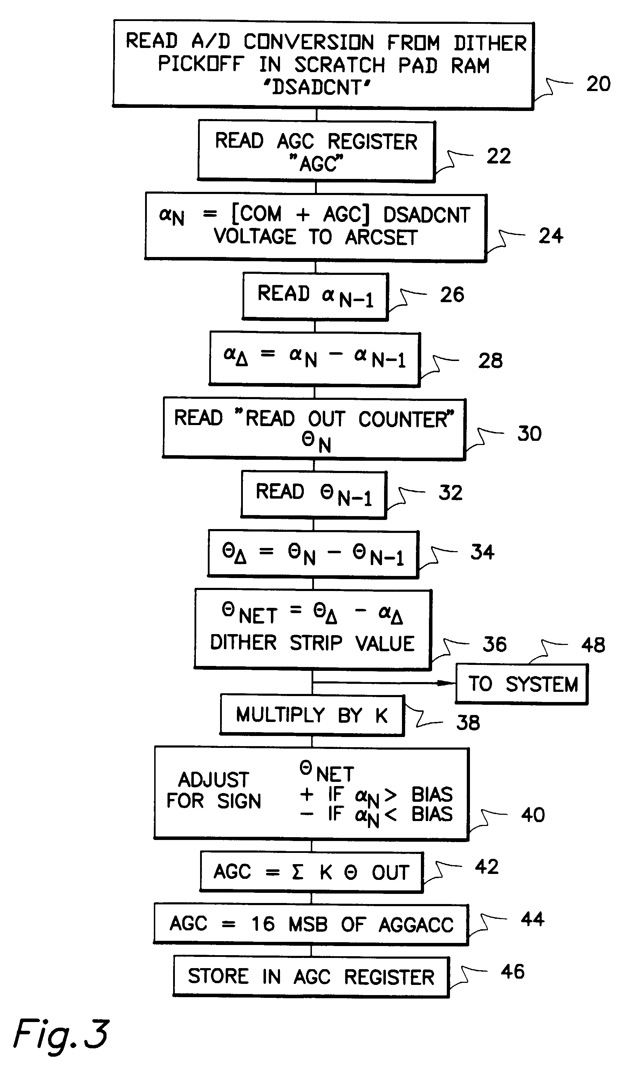

Referring now to Figure 3 which shows a schematic block diagram of the method of the invention to remove the dither component from the readout signal. The readout signal contains both the inertial navigation signal and the dither frequency signal. The accurate and repeatable measurement of inertial position requires that the dither signal be removed or stripped from the readout signal.

Figure 3 shows the method of stripping the dither signal from the readout signal. Process block 20 shows the A/D conversion from the dither pickoff 244A to a scratch pad random access memory location entitled "DSADCNT". The method of analog to digital conversion is described in more detail below. DSADCNT represents the dither pickoff voltage. To strip the dither requires the conversion of the dither pickoff voltage 101 to an angular displacement representing the movement of the gyro block.

The conversion of pickoff voltage 501A (DSADCNT) to angular displacement α_{N} follows the equation: α_{N} = [K_{COMP} + AGC ] * DSADCNT . Where K_{COMP} is a compensation factor used to adjust the magnitude of the conversion in relation to the AGC factor, AGC is an automatic gain control factor which helps compensate for changes in dither pickoff characteristics due to temperature, aging, etc. and DSADCNT is the converted dither pickoff voltage 501A.

In the preferred embodiment of Figure 3 the AGC factor is accessed from an AGC register in step 22. The process then flows to step 24 where the dither angular displacement α_{N} is computed as the sum of K_{COMP} plus AGC, times DSADCNT. In one preferred embodiment of the invention the compensation factor is 1000. The α_{N} is in readout count units (1.11 readout counts ≈ 1 arc second) and represents the conversion from voltage which is represented in the DSADCNT register.

The dither stripper must then compute the change in angular displacement of the dither motor since the last time the process was sampled. The process flows to process block 26 where the last computation of dither angular displacement α_{N-1} is read from memory. The process then flows to process block 28 where the difference between the current angular displacement α_{N} and the last measured angular displacement α_{N-1} is computed and stored in a variable called α_{DELTA}. α_{DELTA} represents the dither component of gyro block movement.

The dither stripper then must compute the laser gyro measured change in displacement to compute the net inertial displacement of the gyro block 200. The process flows to process block 30 where the readout counter 700A value Θ_{N} from the laser gyro is read. The process next flows to process block 32 where the last read readout counter value Θ_{N-1} is read from memory. In step 34 the difference in readout counter values Θ_{DELTA} is computed as Θ_{N} - Θ_{N-1}. The process then flows to process block 36 where the actual inertial navigation rotational change called Θ_{NET} is computed as Θ_{DELTA} - α_{DELTA}.

Once the dither signal has been stripped the process then provides Θ_{NET} to the inertial navigation system using the laser angular rate sensor of the invention. Concurrently at step 38 the process enters a phase in which an adjustment is made to the AGC coefficient. The process flows to process block 38 where the net output is multiplied by a gain adjustment factor K which is predetermined before the operation of the method of the invention to allow the system to convert faster. During initial turn on K is set to a high value and lowered as the gyro approaches steady state. The process then flows to process block 40 where the automatic gain control constant AGC is adjusted depending on the magnitude of Θ_{NET} and α_{N}. If α_{N} and Θ_{NET} are the same sign then AGC is compensated in the positive direction. If α_{N} and Θ_{NET} are of different sign then AGC is compensated in the negative direction. The process then flows to process block 42 where an automatic gain control accumulator "AGCACC" is updated with the new Θₙₑₜ multiplied by the constant K. The AGC accumulator "AGCACC" is the sum of all Θₙₑₜ's multiplied by the constant K where Θₙₑₜ and K can be of either sign. The AGC coefficient is then gain limited in process block 44. The process then flows to process 46 where the new AGC coefficient is stored for reuse in the method of the invention in process 22. The dither stripping algorithm of Figure 3 is repeated for each new measurement of angular displacement of the dither drive motor.

In one embodiment of the invention the Intel 80C196KC Micro-controller is used to execute the dither stripper method of the invention. The following software description outlines one method of implementing the dither stripper.

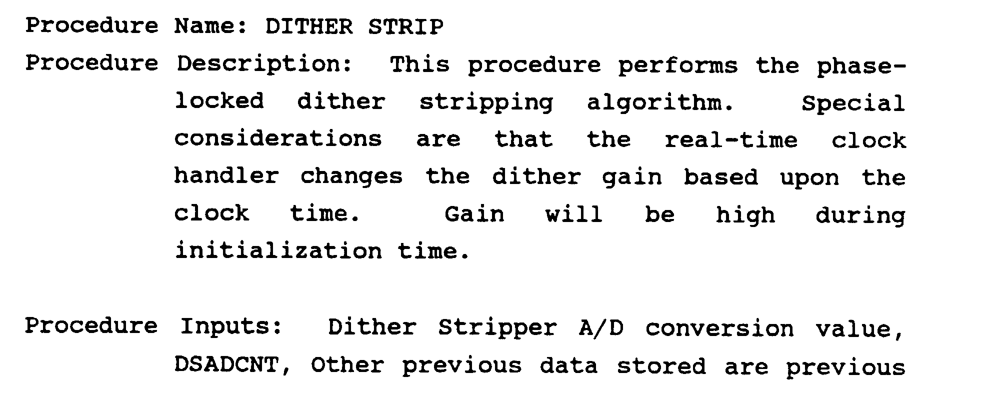

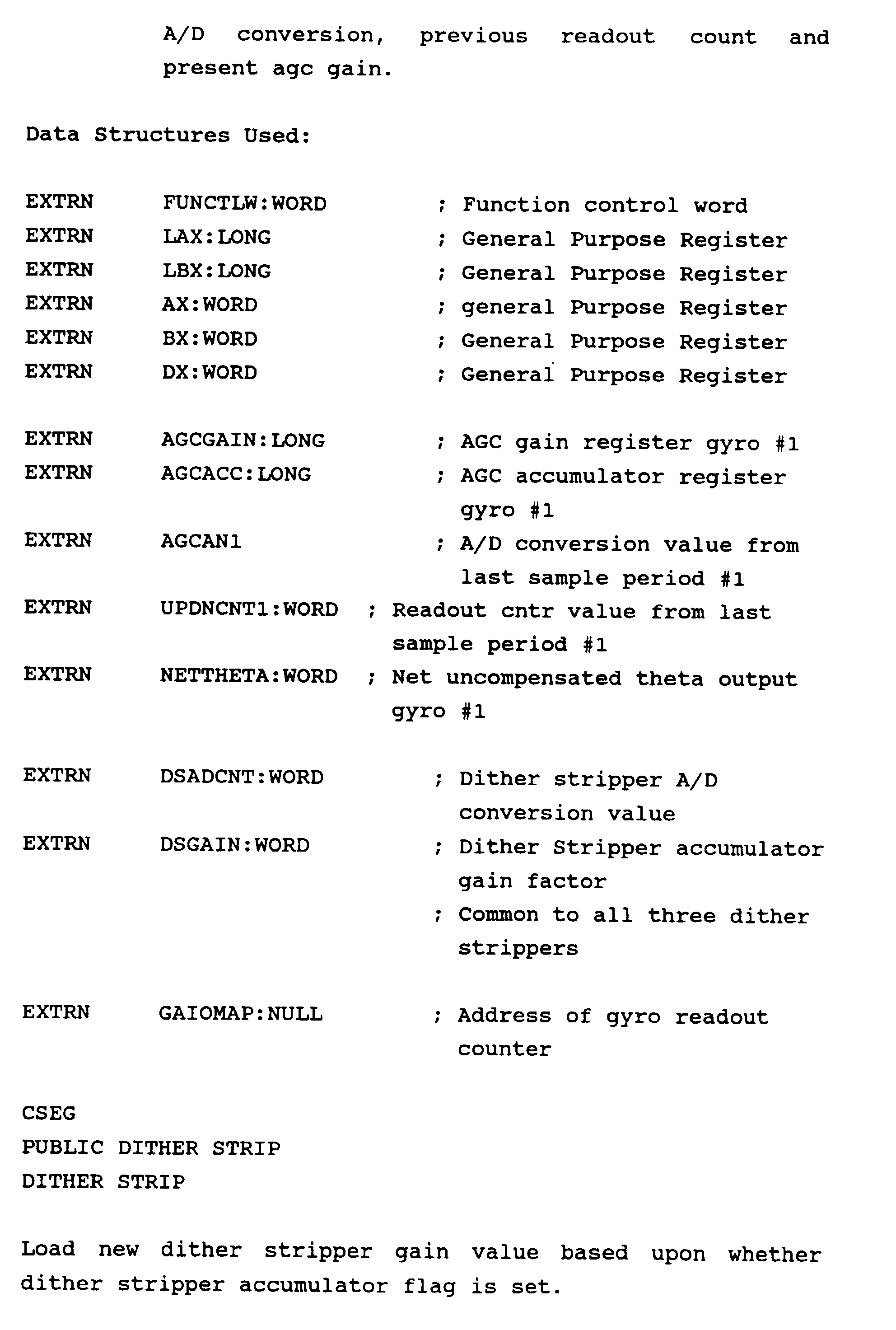

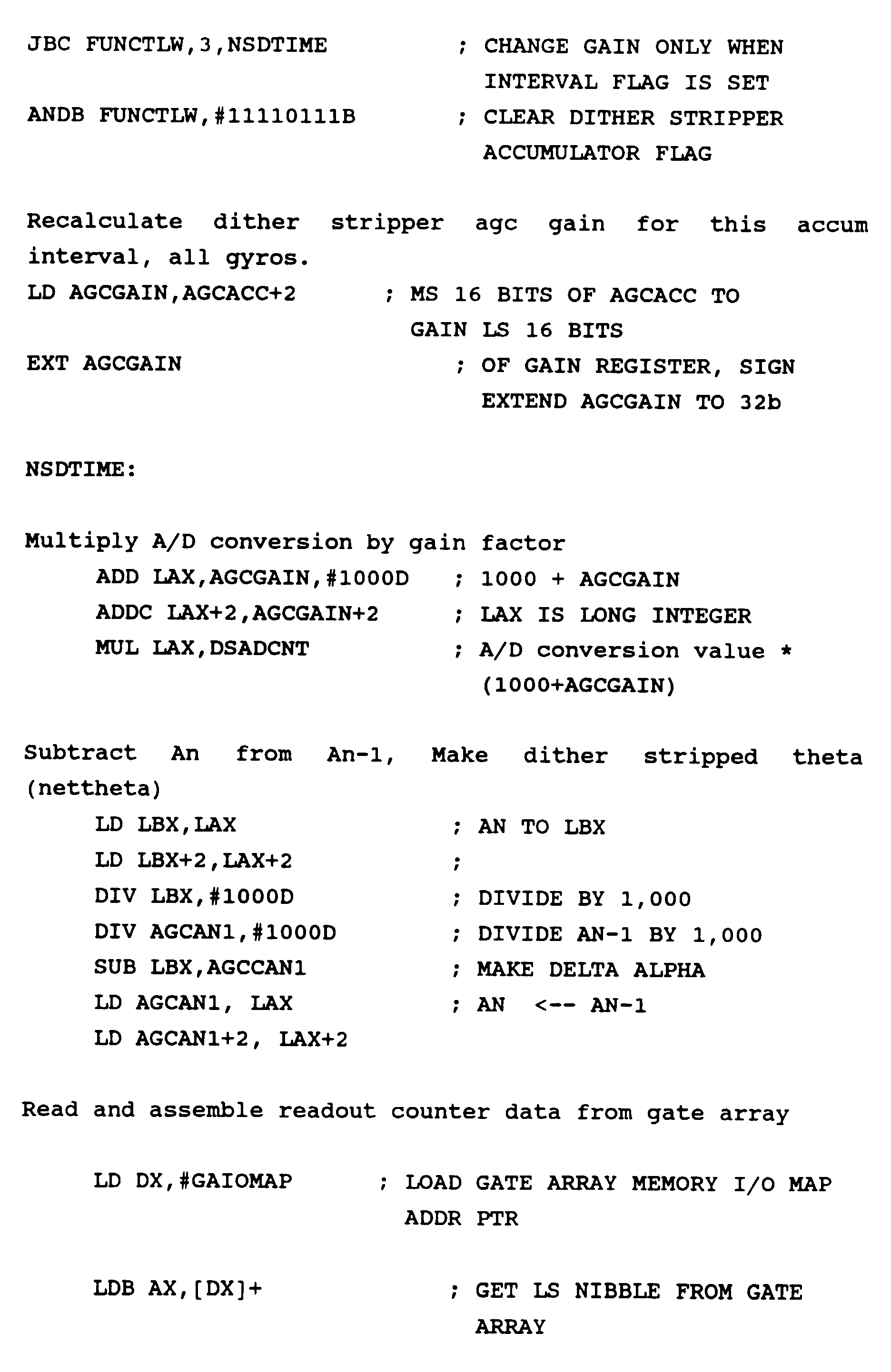

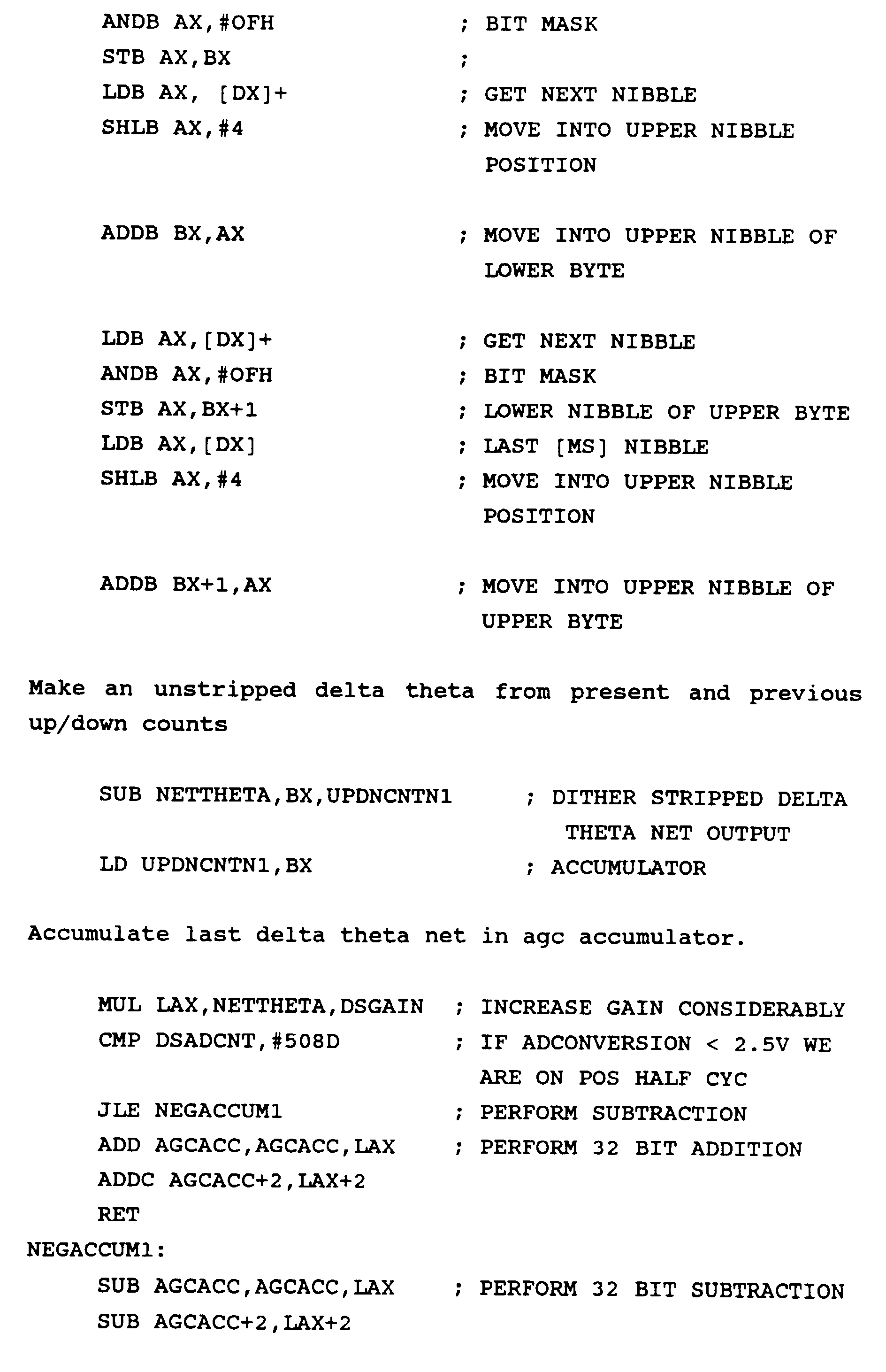

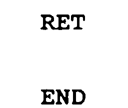

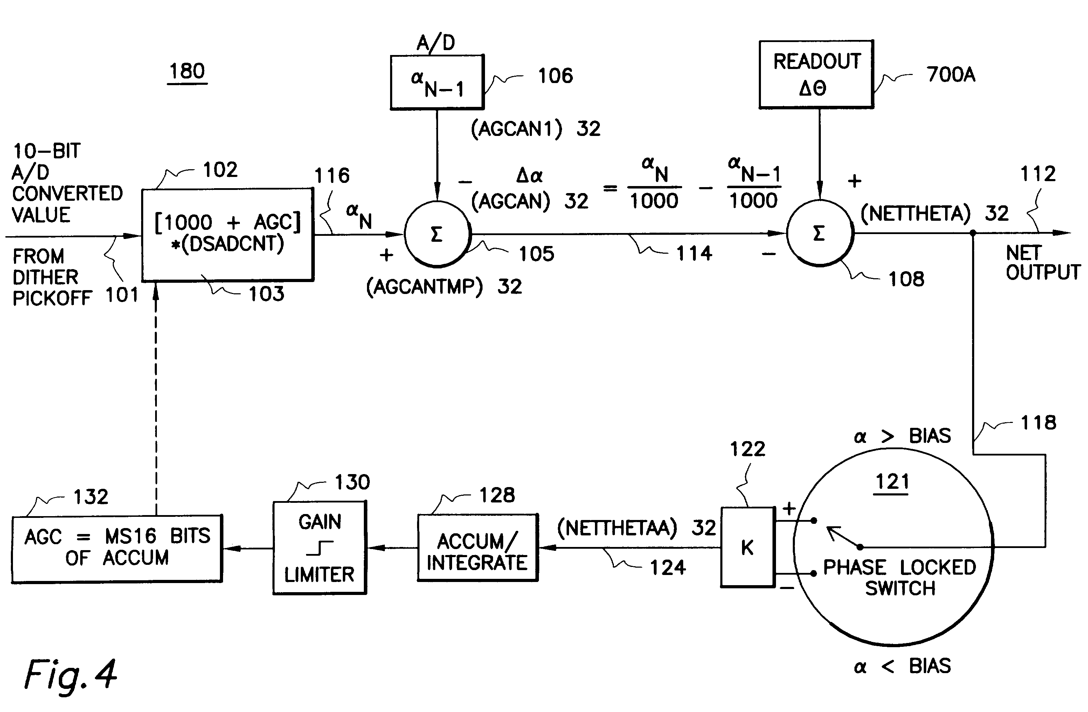

Now referring to Figure 4 which shows a method of the dither stripping algorithm of the invention used to strip the laser gyro of the dither signal. In Figure 4 the 10 bit A/D converted value from the dither pickoff 244A is input at signal line 101. Signal line 101 is input to a sum and multiply unit 102 which sums a predetermined constant, in this embodiment of the invention determined to be 1000, to the automatic gain control constant AGC. The sum of the predetermined constant plus the AGC coefficient is multiplied by the DSADCNT register. The result of this computation K_{CV} is output on signal line 116 as αₙ. K_{CV} is used in the LASER GYRO DIRECT DITHER DRIVE method and apparatus of applicants copending application referenced earlier. α_{N} is then compared with comparator 105 with the last sampled αₙ₋₁ 106 from the A/D converter. The output of the comparator 105 is provided on a 32 bit bus as α_{DELTA} which is equal to α_{N}/1000 - α_{N-1}/1000. Those skilled in the art will recognize that the number 1000 is chosen to adjust the measured gain and measured dither pickoff signals and stored angular displacements of the dither such that they will fit into the word width of the system.

The output signal from comparator 105 is provided on signal line 114 as α_{DELTA} to an additional comparator 108 which compares the current change in the angular displacement of the gyro block with the change in measured angular displacement of the laser gyro readout Θ_{DELTA}, provided in block 700A. The comparator 108 then provides a Θ_{NET} which is a 32 bit representation of the actual inertial navigation output Θ_{NET} = e - α. The net output is provided on the 32 bit bus shown as signal line 112. The Θ_{NET} output is also fed to a phase lock switch 121 which is switched based on the comparison between the angular displacement of α_{N} and the gyro dither pickoff bias. If the bias is less than α_{N} the gain adjust is positive to the Θ_{NET}. If the bias is greater than the angular displacement output, the gain adjust is negative to Θ_{NET}. The net output is provided after gain adjustment by gain adjustment block 122 on signal line 124 as Θ_{NET_A} which is also a 32 bit quantity. The Θ_{NET_A} signal is provided to an accumulate/integrate stage 128 where the 32 bit representation of the Θ_{NET_A} is integrated with prior Θ_{NET_A} values from other stripping cycles.

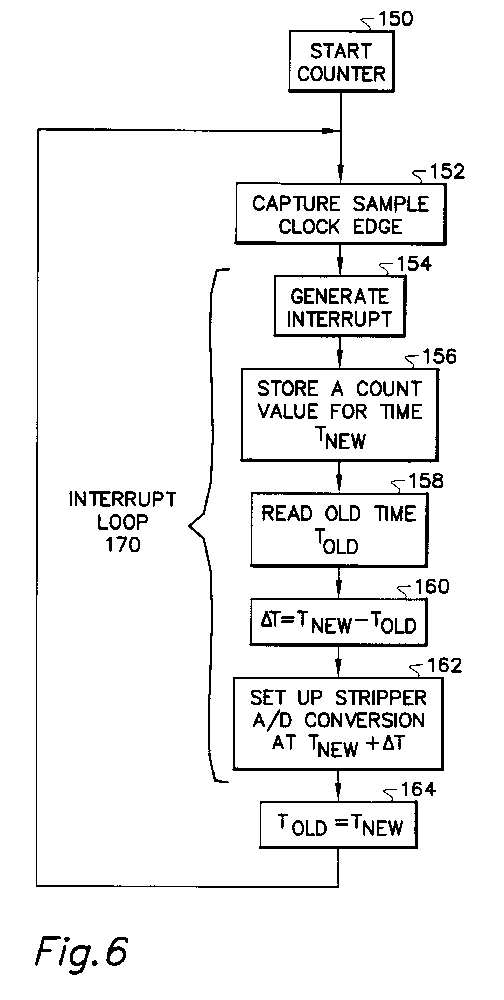

The internal representation of the 32 bit value found in the AGC accumulator is shown in Figure 5. Figure 5 shows the most significant bits of the AGC accumulator register 127 and the least significant 16 bits of the 32 bit AGC accumulator register 126. The AGC accumulator 129 is known as 129. The process then gain limits the output of the accumulator 130 which provides only the most 16 significant bits of the AGC accumulator 129 as the new AGC signal. This method prevents oscillations and small deviations in AGC from being introduced into the automatic gain control loop 180. Now referring to Figure 6 which shows the method of the invention used to compute and anticipate the occurrence of the next system sample clock. The importance of anticipating the sample clock is illustrated by the need for the external system to obtain inertial navigation data which is synchronized to a external clock uniform throughout the inertial navigation system. Without this capability inertial navigation data would be provided asynchronously thus resulting in inaccurate evaluation of inertial position.

The process of Figure 6 starts a counter in process block 150 when the process is first initialized. The process then flows to process block 152 where a edge of a sample clock from the system is captured which generates an interrupt in process block 154. The interrupt then starts a process called the interrupt loop 170. The interrupt loop schedules an A/D conversion. A count value from the counter of step 150 is stored at the interrupt time when the interrupt is generated in process step 154. The process then flows to 158 where the last time an interrupt occurs is read from memory. The process then flows to 160 where the difference in time between the old interrupt and the new interrupt is computed as t_{DELTA}. The process then flows to 162 where the A/D conversion is set up in the high speed output of the microprocessor. The new time for the high speed output to occur is at the t_{NEW} plus t_{DELTA}. The process then flows to 164, the t_{OLD} is set up to be equal to the t_{NEW} and the process returns to process 152 where the next sample clock is captured. The method of Figure 6 dynamically compensates for changes in system sample clock period and dynamically tracks the behavior of the system sample clock. The A/D conversion for the dither stripper is set up in 162 in the HSO logic. The A/D conversion 162 is also used by the direct digital dither drive which is described in applicant's copending application entitled LASER GYRO DIRECT DITHER DRIVE attorney docket No. A41-14356/1362.

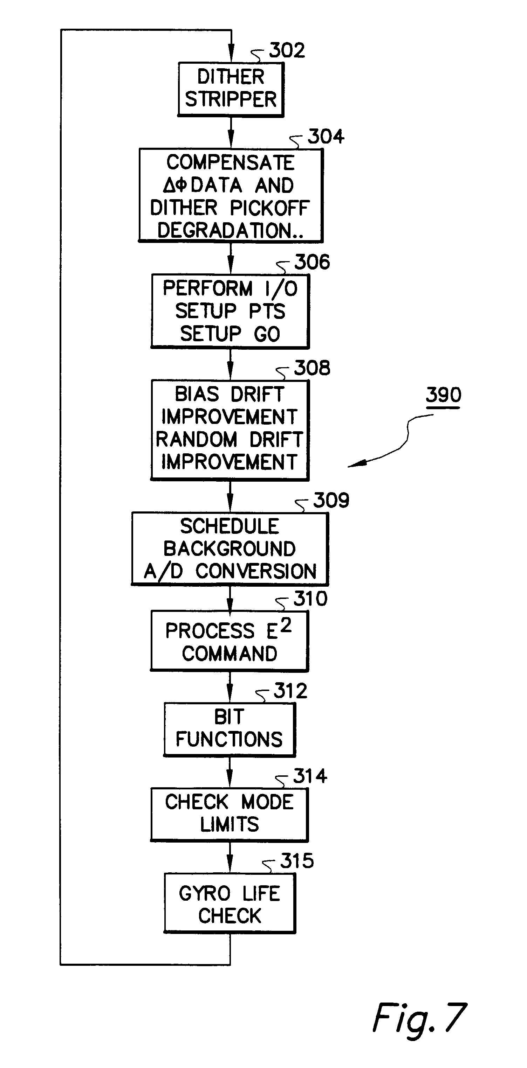

Monitor control loop 390 shown in Figure 7 is the main process execution loop for the digital modular gyro 10. The monitor control loop waits for the dither stripper A/D conversion to complete before continuing the execution of the monitor control loop. A conversion complete flag is included in the apparatus of the invention which if set indicates that the A/D conversion has completed. The monitor control loop 390 shows first the execution of the dither stripper algorithm 302. The compensation of the rotational inertial navigation data for temperature bias drift and age occurs next in step 304. The monitor control loop 390 performs I/O set up for the system in 306. The process then flows to the bias drift improvement and random drift improvement step in 308. The process then flows to 310 where any commands, given by an outside system, for the modular gyro are processed. The process executes a built-in test function at 312 and checks laser mode limits in process 314. The monitor control loop 390 then repeats this set of processes until the modular gyro 10 is shut down.

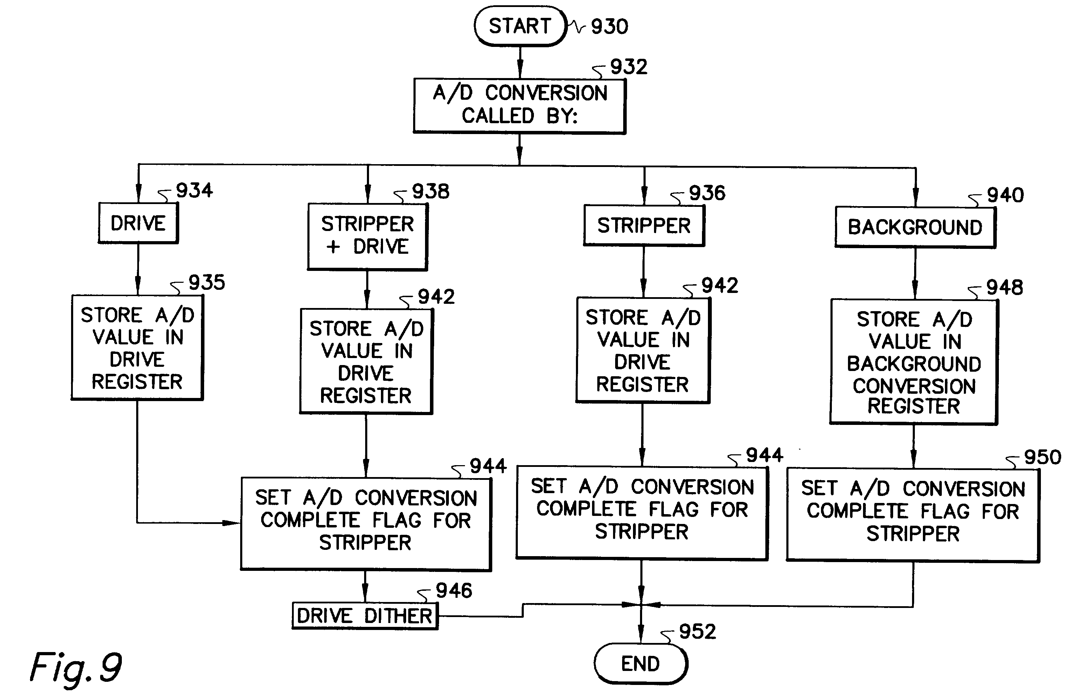

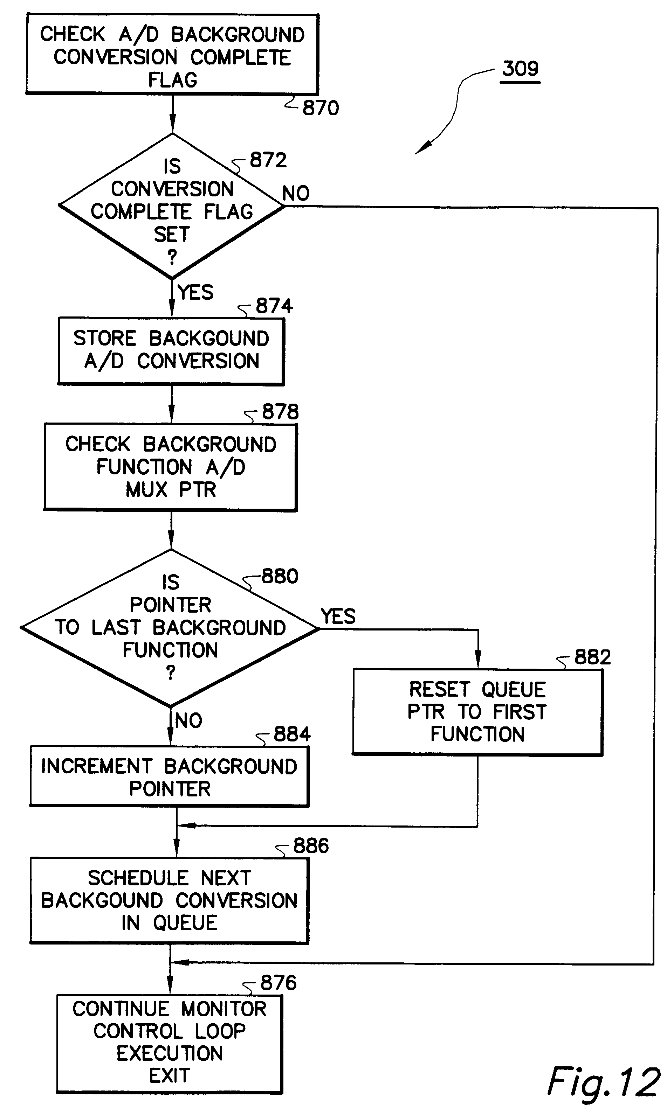

Now referring to Figure 12 which shows the method of scheduling a A/D background conversion. The scheduling of the A/D background conversion occurs in a hardware system that has a predetermined set of A/D conversion events that can be scheduled in a queue. The number of A/D conversions are predetermined. In one example embodiment of the invention there are seven A/D conversions in the queue. The process of arbitrating them with the monitor control loop shown in Figure 9 first starts in step 870 where the A/D background conversion complete flag is checked. The process then flows to 872 where the conversion complete flag is checked to see if it is set. If it is not set the process flows to exit the routine to return to the monitor control loop in step 870. In this case the A/D conversion cannot be accomplished because the A/D conversion for the last scheduled A/D conversion is not done yet. If the conversion complete flag is set the process flows to step 874 where the current background A/D conversion is stored in a background conversion A/D register. This relates the current background A/D conversion to a function that is set up by another routine such as measurement of temperature, PLC monitoring, etc. The process then flows to step 878 where the background A/D conversion multiplexer pointer is checked. The process then flows to 880 which determines what to do after the pointer is checked. If it points to the last background function then the queue is reset in step 882 to point to the first function. If the pointer is not the last background function then the process increments to the next background function pointer in 884. The process in either case flows to step 886 to schedule another background conversion in the queue. The process then exits to the monitor control loop in 876.

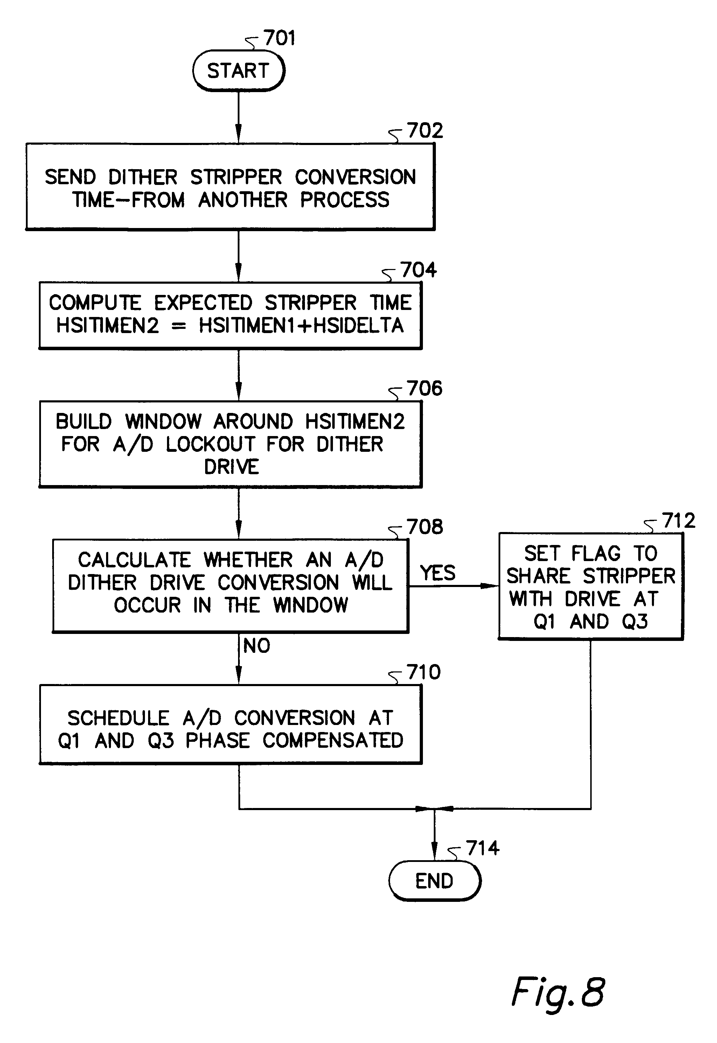

Now referring to Figure 8 which shows the method of arbitrating a single analog to digital converter between multiple analog signal inputs in the dither stripper application of the method of the invention. Figure 8 shows a process flow diagram in which the digital modular gyro 10 transfers a dither stripper conversion time 702 to step 702. The conversion time HsiTimel is calculated from the dither stripper process of Figure 6 as t_{NEW} and HsiDelta as t_{DELTA}.

The process then flows to compute the expected stripper time which is calculated from two values which are sent in process 702. The first value is the HsiTimel which is the beginning of the dither stripper conversion time and the HsiDelta which is also sent from the external system through process 702. The expected dither stripper sample time is the sum of the HsiTimel and HsiDelta. This time is called HsiTime2. The process then flows to 706 where a window is built around the HsiTime2 to lock out the A/D converter for the dither drive. This prevents the dither drive A/D conversion from interfering with the dither stripper A/D conversion if they occur simultaneously. The A/D converter in this embodiment of the invention is an asynchronous converter. The A/D conversion will occur asynchronously with the processes that set the A/D conversion up. Process step 708 calculates whether or not the A/D conversion for the dither drive will occur in the dither stripper window. The process then forks to either process step 712 or process step 710. Process step 710 sets up the high speed output content addressable memory (HSO CAM) to schedule a phase compensated A/D conversion and software timer flag and interrupt specifically for the dither drive. Process step 712 sets up the HSO CAM to schedule a software timer flag and interrupt specifically for the dither drive to share the already scheduled dither stripper A/D conversion. The method of the invention checks the software time flag's condition to determine what type of action to take at the scheduled time, whether a dither stripper conversion, dither drive conversion, a shared dither stripper and dither drive conversion or a background conversion. Process step 708 provides a method of either scheduling a new A/D conversion or sharing the one that is scheduled to happen. Implicit in the method of the invention is the assumption that a single A/D conversion within the window is adequate for dither drive applications because the dither stripper A/D conversion is always of highest priority. In process 712 a flag is set which will indicate to other routines, namely the dither drive routine and the dither stripper routine that the A/D conversion will be shared. In process step 710 the A/D conversion is scheduled and the result of the conversion is sent to the content addressable memory within the microcontroller 100 for the high speed output logic described below. The A/D conversion is scheduled at time Q1 and Q3 which have been phase compensated which is described in applicant's copending PCT application entitled LASER GYRO DIRECT DITHER DRIVE. The process then flows to 714 where the arbitration of the A/D converter has been completed.

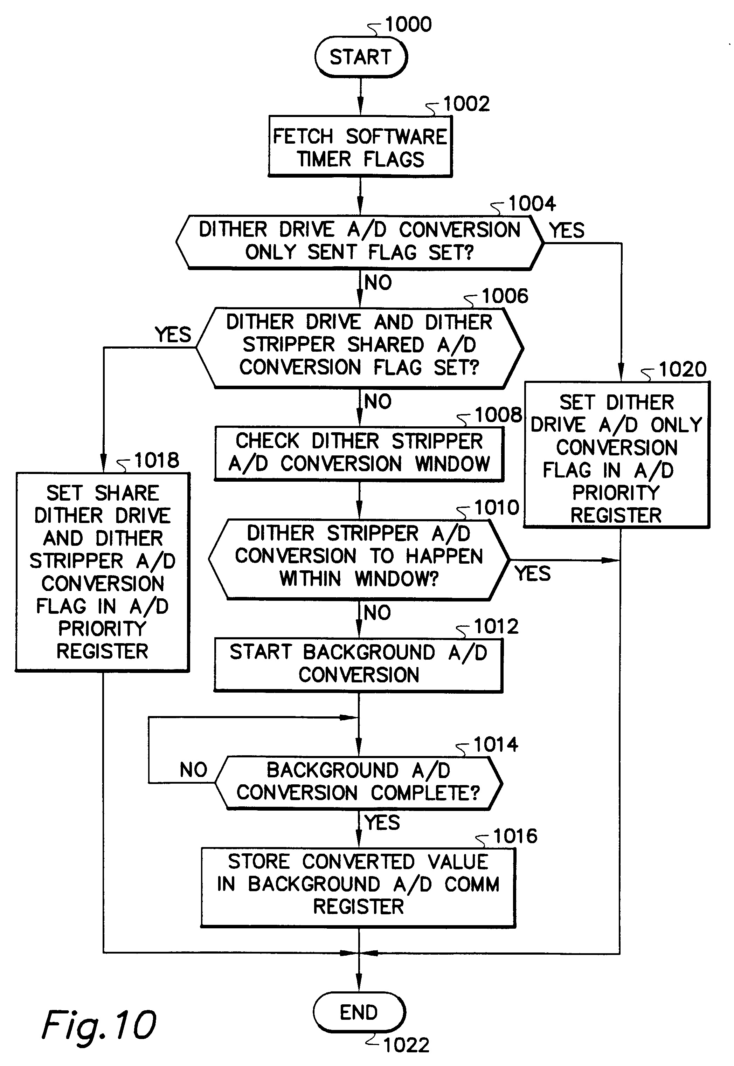

Now referring to Figure 9 which shows a schematic representation of the laser gyro dither stripper A/D conversion handler. A/D conversions are required in the modular gyro for dither drive, dither stripper and background conversions such as those required to compute the quadratures of the dither. The process shown in Figure 9 is the method by which the A/D conversions are handled depending on which process called the A/D conversion. The method starts at 930 with an A/D conversion interrupt. The source of the A/D conversion is determined to originate from, in process block 932, either the dither drive at 934, the dither stripper at 936, the dither stripper and dither drive 938 or background processes 940. The stripper and drive step 938, indicates that the dither drive A/D conversion happened within the dither stripper A/D conversion window. The process flows to step 942, just as a simple dither stripping operation, because the window for the dither stripper will be adequate for the dither drive also. The digital drive 934 calling the A/D conversion flows directly to the dither drive at 946. The dither drive routine is described in more detail in Figure 10.

By the time the A/D conversion "happens" it is already known which processes called for the A/D conversion. This was predetermined by the T2CAP interrupt shown in Figure 8 and software timer interrupts.

The process flows to step 942 if the dither stripper or the dither drive and dither stripper call for an A/D conversion wherein the A/D value in the stripper register is read. The A/D conversion complete flag is then set at 944 to indicate that the recent A/D conversion value for the stripper or stripper and drive is in the stripper register and was called by the stripper and drive. The process then flows in either case of the drive or stripper and drive to drive the dither at 946. In the instance of a background A/D conversion the process flows to 940 where the A/D value is fetched out of the background register at 948 and the conversion complete flag is set for a background conversion 950. In all cases the process ends at 952.

Now referring to Figure 10 which shows an interrupt service routine for the software timer interrupt to schedule either a dither only conversion, shared conversion or background conversion. The process starts 1000 by fetching a software timer flag in step 1002 from a special function register. The process then checks to see whether or not the software timer flag is set for a dither drive A/D conversion. If so the process proceeds to step 1020 to set the dither drive A/D conversion only flag in the A/D priority register in the microcontroller 100 scratch pad RAM and ends at step 1022. If a dither drive conversion is not indicated then the process flows to step 1006 where the process checks to see whether or not the software timer flag is set for a drive and stripper conversion. If so the process proceeds to step 1018 to set the share dither stripper with the dither drive A/D conversion flag in the A/D priority register in the microcontroller 100 scratch pad RAM and ends at step 1022. If a shared conversion is not indicated then the process flows to step 1008 where the method of the invention checks whether or not a dither stripper A/D conversion is in process. Implicit in the method of Figure 10 is the condition that if there is not a shared conversion or a dither drive conversion there must be a background conversion. The process then flows to step 1010 to check whether or not the dither stripper A/D conversion will happen within a window defined as HsiTime + HsiDelta as explained in step 702. If the conversion occurs in the window the process ends at step 1022. If the conversion does not occur in the window the process flows to step 1014 to wait for the background conversion to complete. The background conversion will occur within a specified period, in one embodiment of the invention the background conversion occurs within 20 microseconds. The process then flows to step 1016 to store the converted value to the background A/D register. The process then ends at step 1022. Those skilled in the art will recognize that either waiting for the background A/D conversion process to complete can be interrupt driven as described in Figure 9 or polled as described in Figure 10.

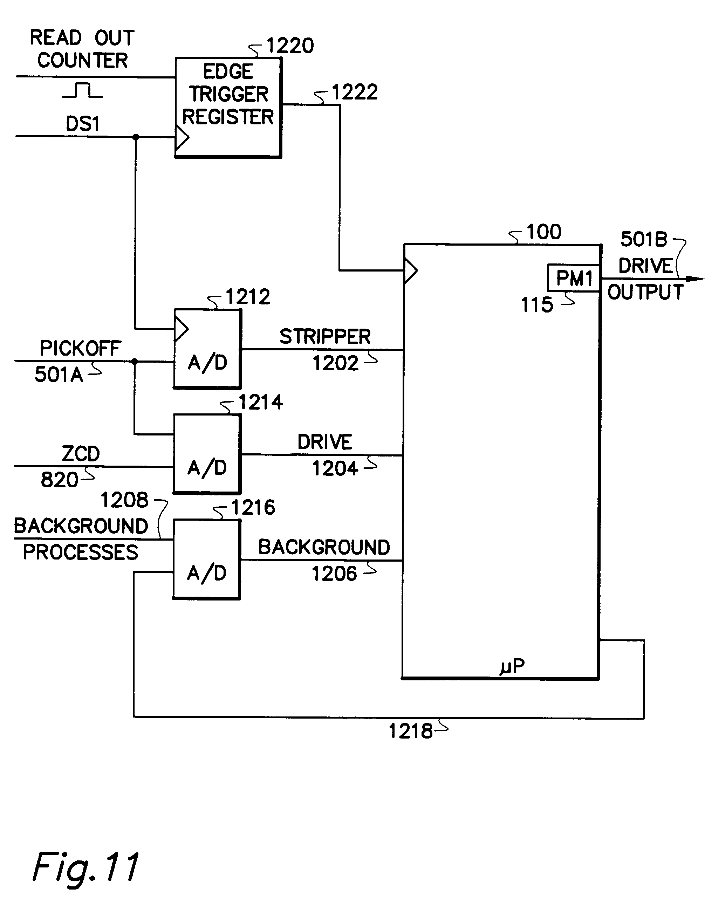

Now referring to Figure 11 which shows the method and apparatus of the invention to drive a laser gyro dither utilizing three analog to digital converts. Those skilled in the art will appreciate that the methods of the invention could be applied to the apparatus described in Figure 11.

In this embodiment the first A/D converter 1212 provides a digital representation of the dither pickoff voltage that is timed appropriately for the dither stripper operations described above. The A/D conversion for the dither stripper must occur when DS1 is active. The microcontroller 100 uses the results of the A/D conversion and the output 1222 of the edge triggered read out counter register 1220 to perform dither stripping operations to produce a dither stripped inertial navigation output 1224.

The second A/D converter 1214 provides a digital representation of the dither pickoff voltage that is timed appropriately for the dither drive operations described above. The A/D conversion for the dither drive must occur when the zero crossing detector 820 is active. The microcontroller 100 uses the results of the A/D conversion 1204 to perform dither drive operations.

The third A/D converter 1216 provides a digital representation of background processes such as temperature measurement, RIM and LIM measurement, PLC monitoring, etc. Background A/D conversions are enabled by the microcontroller through enable line 1218.

The invention has been described herein in considerable detail to provide those skilled in the art with the information needed to apply the novel principles and to construct and use such specialized components as are required. However, it is to be understood that the invention can be carried out by specifically different equipment and devices, and that various modifications, both as to the equipment details and operating procedures, can be accomplished without departing from the scope of the invention itself, as defined in the appended claims.

## Claims

1. A dither stripper apparatus for a laser gyro (10) having a dithered gyro block (200) with a dither motor (244) and dither pickoff (244A), the dither stripper apparatus comprising:
a. a means (402, 404, 406 and 407) for sensing the dither pickoff connected to the dither pickoff (244A) and having a dither pickoff output (245A);
b. a means for amplifying (400) the dither pickoff output (245A) having an amplified dither pickoff output (501A);
c. a means (110) for analog to digital conversion connected to the amplified dither pickoff output (501A) having a digital dither signal output (101); and
d. a means for digital control (100) connected to the digital dither signal output (101) having a dither stripped inertial navigation output, the digital control means (100) being adapted such that in use it converts the digital dither signal output (101) to an angular displacement value (α_{N}), generates a change in angular displacement (Δα) by subtracting from the angular displacement value (α_{N}) a previous angular displacement value (α_{N-1}), generates a change in read out counter value (θ_{Δ}) by reading a new readout counter value (θ_{N}) and subtracting from the new readout counter value a previous read out counter value (θ_{N-1}), and generating the dither stripped inertial navigation output (θ_{NET}) to be the difference between the change in angular displacement (Δα) and the change in readout value (θ_{Δ}), **characterized** said digital control means being adapted for the application to the dither signal output (101) of an automatic gain control factor (AGC) determined, in a phase lock loop (118 - 132) in response to values of the dither stripped inertial navigation output (θ_{NET}), and the angular displacement value (α_{N}).

2. Apparatus according to claims 1, **characterized by**:
a means (102) for reading the digital pickoff signal (101);
a means (102) for reading an automatic gain control register from a memory;
a means (112) for providing the change in readout value to the laser gyro system.

3. Apparatus according to claim 2, **characterized in that** the automatic gain control value is adjusted by an automatic gain control compensation apparatus comprising:
a. a means (121 and 122) for multiplying the difference between the change in angular displacement and the change in readout value (θ_{NET}) by a positive predetermined value if the angular displacement is greater than a dither pickoff bias and multiplying by a negative k if the angular displacement is less than a dither pickoff bias;
b. a means (128) for summing said multiplied value to provide a total aggregated automatic gain control value;
c. a means (130 and 132) for adjusting the automatic gain control value by the total aggregated automatic gain control value.

4. Apparatus according to claim 2, **characterized in that** the angular displacement is computed from the dither pickoff value by multiplying the dither pickoff value by the automatic gain control value plus a predetermined compensation value.

5. Apparatus according to claim 2, **characterized in that** the automatic gain control value is a 16 bit value.

6. Apparatus according to claim 2, **characterized in that** the total aggregated automatic gain control value (129) is a 32 bit accumulator and the automatic gain control value is the 16 most significant bits of the 32 bit automatic gain control accumulator.

7. Apparatus according to claim 1 having a dither zero crossing detector (820). a read out counter (700), and a system sample strobe (DS1), comprising:
a. an edge triggered register means (1220) for latching the read out counter value on the system sample strobe DS1 having a latched read out counter output (1222);
b. a first analog to digital conversion means (1212) connected to the dither pickoff (244A) for generating a stripper sample (1202) enabled by the system sample strobe DS1;
c. a second analog to digital conversion means (1214) connected to the dither pickoff (244A) for generating a dither drive sample (1204) enabled by the dither zero crossing detector (820); and

8. Apparatus according to claim 7, further comprising a third analog to digital conversion means (1216) connected to a plurality of multiplexed background signals (1208) for generating a background sample (1206) enabled by the direct digital dither control means (100).

9. A method for dither stripping at a laser gyro having a dithered gyro block with a dither motor and dither pickoff, and comprising the steps of:
a. sensing an analog dither signal from the dither pickoff;
b. converting the analog dither signal into a digital pickoff signal (101);
c. reading the digital pickoff signal;
d. reading an automatic gain control (AGC) from memory;
e. converting the digital pickoff signal to an angular displacement value (α_{N});
f. reading an old angular displacement value (α_{N-1}) from memory;
g. computing the difference (Δα_{N}) between the old and the new angular displacement;
h. reading a readout counter value (θ_{N});
i. reading an old readout counter value (θ_{N-1});
j. computing a difference readout counter value (θ_{Δ});
k. computing the dither stripping value to be the difference θ_{NET} between the change in angular displacement (Δα) and the change in readout value (θ_{Δ} );
l. providing the change in readout value to the laser gyro system.
m. multiplying said difference between the change in angular displacement and the change in readout value by a positive predetermined value if the angular displacement (α_{N}) is greater than a dither pickoff bias and multiplying by a negative of the predetermined value if the angular displacement (α_{N}) is less than a dither pickoff bias;
n. summing said multiplied value to provide a total aggregated automatic gain control value;
o. adjusting the automatic gain control value by the total aggregated automatic gain control value.

## Patentansprüche

1. Zitter-Unterdrückungsvorrichtung für einen Laserkreisel (10) mit einem gezitterten Kreiselblock (200), mit einem Zittermotor (244) und einem Zitterabgriff (244A), wobei die Zitter-Unterdrückungsvorrichtung umfaßt:
a. eine Einrichtung (402,404,406 und 407) zur Erfassung des mit dem Zitterabgriff (244A) verbundenen Zitterabgriffes mit einem Zitterabgriff-Ausgang (245A);
b. eine Einrichtung (400) zur Verstärkung des Zitterabgriff-Ausganges (245A) mit einem verstärkten Zitterabgriff-Ausgang (501A);
c. eine Einrichtung (110) zur Analog/Digital-Wandlung die an den verstärkten Zitterabgriff-Ausgang (501A) angeschlossen ist und einen digitalen Zittersignal-Ausgang (101) besitzt; und
d. eine Einrichtung (100) zur digitalen Steuerung, die an den digitalen Zittersignal-Ausgang (101) angeschlossen ist und einen zitterunterdrückten inertialen Navigationsausgang besitzt, wobei die digitale Steuereinrichtung (100) so angepaßt ist, daß sie im Gebrauch den digitalen Zittersignal-Ausgang (101) in einen Winkel-Verschiebewert (α_{N}) umwandelt, eine Änderung in der Winkelverschiebung (Δα) erzeugt, indem sie von dem Winkel-Verschiebewert (α_{N}) einen vorangegangenen Winkel-Verschiebewert (α_{N-1}) subtrahiert, eine Änderung in der Auslesung eines Zählerwertes (θ_{Δ}) erzeugt, indem sie einen neuen Auslese-Zählerwert (θ_{N}) liest und von dem neuen Auslese-Zählerwert einen vorangegangenen Auslese-Zählerwert (θ_{N-1}) subtrahiert, und den zitterunterdrückten inertialen Navigationsausgang (θ_{NET}) als die Differenz zwischen der Änderung in der Winkelverschiebung (Δα) und der Änderung in dem Auslesewert (θ_{Δ}) erzeugt, **dadurch gekennzeichnet**, daß die digitale Steuereinrichtung ausgelegt ist, um an den Zittersignal-Ausgang (101) einen automatischen Verstärkungs-Steuerfaktor (AGC) anzulegen, der in einer Phasenverriegelungsschleife (118 - 132) auf Grund von Werten des zitterunterdrückten inertialen Navigationsausganges (θ_{NET}) und des Winkel-Verschiebewertes (α_{N}) festgelegt wird.

2. Vorrichtung nach Anspruch 1, **gekennzeichnet durch** : eine Einrichtung (102) zum Lesen des digitalen Abgriffsignales (101);
eine Einrichtung (102) zum Lesen eines Steuerregisters für die automatische Verstärkung aus einem Speicher;
eine Einrichtung (112) zur Vorgabe der Änderung im Auslesewert an das Laserkreiselsystem.

3. Vorrichtung nach Anspruch 2, **dadurch gekennzeichnet**, daß der automatische Verstärkungs-Steuerwert eingestellt wird durch eine automatische Verstärkungs-Steuer-Kompensationsvorrichtung , welche umfaßt:
a. eine Einrichtung (121 und 122) zum Multiplizieren der Differenz zwischen der Änderung in der Winkelverschiebung und der Änderung im Auslesewert (θ_{NET}) mit einem positiven vorbestimmten Wert, wenn die Winkelverschiebung größer ist als eine Zitterabgriffvorspannung, und mit einem negativen Wert k, wenn die Winkelverschiebung kleiner als eine Zitterabgriffvorspannung ist;
b. eine Einrichtung (128) zum Aufsummieren des multiplizierten Wertes, um einen angesammelten automatischen Gesamt-Verstärkungs-Steuerwert vorzugeben;
c. eine Einrichtung (130 und 132) für die Einstellung des automatischen Verstärkungs-Steuerwertes durch den angesammelten automatischen Gesamt-Verstärkungs-Steuerwert.

4. Vorrichtung nach Anspruch 2, **dadurch gekennzeichnet**, daß die Winkelverschiebung aus dem Zitter-Abgriffswert errechnet wird durch Multiplizieren des Zitter-Abgriffwertes mit dem automatischen Verstärkungs-Steuerwert plus einem vorbestimmten Kompensationswert.

5. Vorrichtung nach Anspruch 2, **dadurch gekennzeichnet**, daß der automatische Verstärkungs-Steuerwert ein Wert mit 16 Bit ist.

6. Vorrichtung nach Anspruch 2, **dadurch gekennzeichnet**, daß der angesammelte automatische Gesamt-Verstärkungs-Steuerwert (129) durch einen 32 Bit-Akkumulator vorgegeben wird und der automatische Verstärkungs-Steuerwert durch die 16 signifikantesten Bits des 32 Bit-Akkumulators für die automatische Verstärkungssteuerung vorgegeben ist.

7. Vorrichtung nach Anspruch 1, mit einem Zitter-Nulldurchgangsdetektor (820). einem Auslesezähler (700) und einem System-Abtastimpuls (DS1), aufweisend:
a. eine flankengetriggerte Registereinrichtung (1220) zur Verriegelung des Auslese-Zählerwertes mit dem System-Abtastimpuls DS1 und mit einem verriegelten Auslese-Zählerausgang (1222);
b. eine erste Analog/Digital-Wandlereinrichtung (1212), die an den Zitterabgriff (244A) angeschlossen ist, um einen UnterdrückungsAbtastimpuls (1202) zu erzeugen, der durch den System-Abtastimpuls DS1 freigegeben wird;
c. eine zweite Analog/Digital-Wandlereinrichtung (1214), die an den Zitterabgriff (244A) angeschlossen ist, um einen Zitter-Steuerimpuls (1204) zu erzeugen, der durch den Zitter-Nulldurchgangsdetektor (820) freigegeben wird; und
wobei die digitale Steuereinrichtung (100) an den Unterdrückungs-Abtastimpuls (1202), den Ansteuer-Abtastimpuls (1204) und den Auslese-Zählerausgang (1222) angeschlossen ist.

8. Vorrichtung nach Anspruch 7, ferner aufweisend eine dritte Analog/Digital-Wandlereinrichtung (1216), die an eine Vielzahl von Multiplex-Hintergrundsignalen (1208) angeschlossen ist, um einen Hintergrund-Abtastimpuls (1206) zu erzeugen. der durch die direkte digitale Zitter-Steuereinrichtung (100) freigegeben wird.

9. Verfahren zur Zitterunterdrückung bei einem Laserkreisel mit einem gezitterten Kreiselblock, einem Zittermotor und einem Zitterabgriff und aufweisend die Schritte:
a. Erfassung eines analogen Zittersignales an dem Zitterabgriff;
b. Umwandlung des analogen Zittersignales in ein digitales Abgriffsignal (101);
c. Lesen des digitalen Abgriffsignales;
d. Lesen einer automatischen Verstärkungssteuerung (AGC) aus einem Speicher;
e. Umwandlung des digitalen Abgriffsignales in einen Winkel-Verschiebewert (α_{N});
f. Lesen eines alten Winkel-Verschiebewertes (α_{N-1}) aus dem Speicher;
g. Errechnung der Differenz (Δα_{N}) zwischen der alten und der neuen Winkelverschiebung;
h. Auslesen eines Auslese-Zählerwertes (θ_{N});
i. Lesen eines alten Auslese-Zählerwertes (θ_{N-1});
j. Berechnung eines Differenz-Auslese-Zählerwertes (θ_{Δ});
k. Berechnung des Zitter-Unterdrückungswertes als die Differenz (θ_{NET}) zwischen der Änderung in der Winkelverschiebung (Δα) und der Änderung im Auslesewert (θ_{Δ});
l. Vorgabe der Änderung im Auslesewert an das Laserkreiselsystem:
m. Multiplizieren der Differenz zwischen der Änderung in der Winkelverschiebung und der Änderung im Auslesewert mit einem positiven vorbestimmten Wert, wenn die Winkelverschiebung (α_{N}) größer als eine Zitter-Abgriffvorspannung ist und multiplizieren mit einem negativen vorbestimmten Wert, wenn die Winkelverschiebung (α_{N}) kleiner als eine Zitter-Abgriffvorspannung ist;
n. Aufsummieren des multiplizierten Wertes, um einen angesammelten automatischen Gesamt-Verstärkungs-Steuerwert vorzugeben;
o. Einstellung des automatischen Verstärkungs-Steuerwertes durch den angesammelten automatischen Gesamt-Verstärkungs-Steuerwert.

## Revendications

1. Appareil de suppression de signal d'activation pour un gyroscope à laser (10) ayant un bloc gyroscopique activé (200) avec un moteur d'activation (244) et un prélèvement de signal d'activation (244A), l'appareil de suppression de signal d'activation comportant:
a. Des moyens (402, 404, 406 et 407) destinés à détecter le prélèvement de signal d'activation reliés au prélèvement de signal d'activation (244A) et ayant une sortie de prélèvement de signal d'activation (245A);
b. Des moyens d'amplification (400) de la sortie de prélèvement de signal d'activation (245A) ayant une sortie de prélèvement de signal d'activation amplifiée (501A);
c. Des moyens (110) pour la conversion analogique-numérique reliés à la sortie de prélèvement de signal d'activation amplifiée (501A) ayant une sortie de signal d'activation numérique (101); et
d. Des moyens de commande numérique (100) reliés à la sortie de signal d'activation numérique (101) ayant une sortie de navigation inertielle dépourvue de signal d'activation, les moyens de commande numérique (100) étant prévus de telle sorte que, lors de l'utilisation, ils convertissent la sortie de signal d'activation numérique (101) en une valeur de déplacement angulaire (α_{N}), générent un changement de déplacement angulaire (Δα) en soustrayant de la valeur de déplacement angulaire (α_{N}) une valeur de déplacement angulaire précédente (α_{N-1}), génèrent un changement de la valeur de compteur lu (θ_{Δ}) en lisant une nouvelle valeur de compteur lu (θ_{N}) et en soustrayant de la nouvelle valeur de compteur lu une valeur de compteur lu précédente (θ_{N-1}), et en générant la sortie de navigation inertielle dépourvue de signal d'activation (θ_{NET}) afin d'être la différence entre le changement de déplacement angulaire (Δα) et le changement de valeur lue (θ_{Δ}), caractérisé en ce que lesdits moyens de commande numériques sont prévus pour l'application sur la sortie de signal d'activation (101) d'un facteur de commande de gain automatique (AGC) déterminé dans une boucle à verrouillage de phase (118 à 132) en réponse à des valeurs de la sortie de navigation inertielle dépourvue de signal d'activation (θ_{NET}) et de la valeur de déplacement de signal angulaire (α_{N}).

2. Appareil selon la revendication 1, caractérisé par :
des moyens (102) destinés à lire le signal de prélèvement numérique (101); des moyens (102) destinés à lire un registre de commande de gain automatique dans une mémoire;
des moyens (112) destinés à délivrer le changement de valeur lue au système de gyroscope à laser.

3. Appareil selon la revendication 2, caractérisé en ce que la valeur de commande de gain automatique est ajustée par un appareil de compensation de commande de gain automatique comportant :
a. Des moyens (121 et 122) destinés à multiplier la différence entre le changement de déplacement angulaire et le changement de valeur lue (θ_{NET}) par une valeur prédéterminée positive si le déplacement angulaire est supérieur à une polarisation de prélèvement de signal d'activation et à multiplier parune valeur négative k si le déplacement angulaire est inférieur à une polarisation de prélèvement de signal d'activation;
b. Des moyens (128) destinés à additionner ladite valeur multipliée afin de procurer une valeur de commande de gain automatique agrégée totale;
c. Des moyens (130 et 132) destinés à ajuster la valeur de commande de gain automatique par la valeur de commande de gain automatique agrégée totale.

4. Appareil selon la revendication 2, caractérisé en ce que le déplacement angulaire est calculé à partir de la valeur de prélèvement de signal d'activation en multipliant la valeur de prélèvement de signal d'activation par la valeur de commande de gain automatique plus une valeur de compensation prédéterminée.

5. Appareil selon la revendication 2, caractérisé en ce que la valeur de commande de gain automatique est une valeur de 16 bits.

6. Appareil selon la revendication 2, caractérisé en ce que la valeur de commande de gain automatique agrégée totale (129) est un accumulateur à 32 bits et la valeur de commande de gain automatique est constituée par les 16 bits de poids fort de l'accumulateur de commande de gain automatique à 32 bits.

7. Appareil selon la revendication 1 ayant un détecteur de passage par zéro de signal d'activation (820), un compteur de lecture (700) et une impulsion d'échantillonnage de système (DS1), comportant :
a. Des moyens de registre déclenchés par front (1220) destinés à verrouiller la valeur de compteur lu sur l'impulsion d'échantillonnage de système (DS1) ayant une sortie de compteur lu verrouillée (1222);
b. Des premiers moyens de conversion analogique-numérique (1212) reliés au prélèvement de signal d'activation (244A) afin de générer un échantillon de suppression (1202) validé par l'impulsion d'échantillonnage de système (DS1);
c. Des seconds moyens de conversion analogique-numérique (1214) reliés au prélèvement de signal d'activation (244A) afin de générer un échantillon de commande de signal d'activation (1204) validé par le détecteur de passage par zéro de signal d'activation (820); et
les moyens de commande numérique (100) qui sont reliés à l'échantillon d'élimination (1202), à l'échantillon de commande (1204) et à la sortie de compteur lu (1222).

8. Appareil selon la revendication 7, comportant en outre des troisièmes moyens de conversion analogique-numérique (1216) reliés à plusieurs signaux de fond multiplexés (1208) afin de générer un échantillon de fond (1206) validé par les moyens de commande de signal d'activation numérique direct (100).

9. Pocédé de suppression d'un signal d'activation dans un gyroscope à laser ayant un bloc gyroscopique activé avec un moteur d'activation et un prélèvement de signal d'activation, et comportant les étapes consistant à :
a. Détecter un signal d'acitivation analogique à partir du prélèvement de signal d'activation;
b. Convertir le signal d'activation analogique en un signal d'activation numérique (101);
c. Lire le signal de prélèvement numérique;
d. Lire une commande de gain automatique (AGC) dans la mémoire;
e. Convertir le signal de prélèvement numérique en une valeur de déplacement angulaire (α_{N});
f. Lire une ancienne valeur de déplacement angulaire (α_{N-1}) dans la mémoire;
g. Calculer la différence (Δα_{N}) entre l'ancien et le nouveau déplacement angulaire;
h. Lire une valeur de compteur lu (θ_{N});
i. Lire une ancienne valeur de compteur lu (θ_{N-1});
j. Calculer une valeur de compteur lu de différence (θ_{Δ});
k. Calculer la valeur de suppression de signal d'activation afin d'être la différence (θ_{NET}) entre le changement de déplacement angulaire (Δ_{α} ) et le changement de valeur lue (θ_{Δ});
l. Délivrer le changement de valeur lue au système de gyroscope à laser;
m. Multiplier ladite différence entre le changement de déplacement angulaire et le changement de valeur lue par une valeur prédéterminée positive si le déplacement angulaire (α_{N}) est supérieur à une polarisation de prélèvement de signal d'activation et multiplier par une valeur négative la valeur prédéterminée si le déplacement angulaire (α_{N}) est inférieur à une polarisation de prélèvement de signal d'activation;
n. Additionner ladite valeur multipliée afin de procurer une valeur de commande de gain automatique agrégée totale;
o. Ajuster la valeur de commande de gain automatique par la valeur de commande de gain automatique agrégée totale.
